# EUROPÄISCHE PATENTSCHRIFT

(11) **EP 1 712 451 B1**
(45) Veröffentlichungstag und Bekanntmachung des Hinweises auf die Patenterteilung: **22.04.2009**
(21) Anmeldenummer: 06002019.5
(22) Anmeldetag: 01.02.2006
(51) Int. Cl.: B62D 21/11

(54) **Als Fahrschemel ausgebildeter Hilfsrahmen für Kraftfahrzeuge**
Auxiliary frame formed as a subframe for a motor vehicle
Châssis auxiliaire en forme d'un faux châssis pour véhicule automobile

(30) Priorität: 13.04.2005 DE 102005017031
(43) Veröffentlichungstag der Anmeldung: 18.10.2006
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A1- 0 941 912
- WO-A-01/42075
- DE-A1- 19 532 531
- DE-U1- 29 520 166

## Beschreibung

Die Erfindung betrifft einen als Fahrschemel ausgebildeten Hilfsrahmen für Kraftfahrzeuge nach dem Oberbegriff des Anspruchs 1.

Als Fahrschemel ausgebildete Hilfsrahmen für Kraftfahrzeuge, die auch als Achsträger bezeichnet werden, sind allgemein bekannt und werden regelmäßig mit der Karosserie über entsprechende Anbindungsstellen verschraubt. Derartige Hilfsrahmen können sowohl im Bereich der Vorderachsen als auch im Bereich der Hinterachsen Verwendung finden.

Aus der gattungsbildenden EP 0 941 912 B1 ist bereits ein als Fahrschemel ausgebildeter Hilfsrahmen für Kraftfahrzeuge mit seitlichen Hilfsrahmen-Längsträgern bekannt, zwischen denen einerseits ein Hilfsrahmen-Querträger verläuft und zwischen denen andererseits ein flächiges Versteifungselement angeordnet ist. Konkret bildet der Hilfsrahmen hier einen Vorderachsträger aus und weist an jedem Längsträger einen Lagerbock zur Aufnahme eines Lenkers des Fahrzeug-Fahrwerks auf. Das flächige Versteifungselement ist durch ein Aluminiumblech mit einer Wandstärke von ca. 3 bis 4 mm gebildet und weist eine im wesentliche viereckige Geometrie auf, so dass das Versteifungselement in Fahrtrichtung betrachtet jeweils an beiden seitlichen Hilfsrahmen-Längsträgern mit je einer Schraubverbindung vor und hinter den Lagerböcken lösbar mit den beiden Längsträgern verbunden ist. Das Versteifungselement kann in seinem flächigen Bereich ferner Versteifungssicken aufweisen und mit einem akustisch dämmenden Material versehen sein. Mit einem derartigen viereckigen, flächigen Aluminiumblech als Versteifungselement soll ein sogenanntes "Schubfeld" erzeugt werden, mittels dem eine beispielsweise aufprallbedingte Kraft, die in einen der Längsträger eingeleitet wird, auf den gegenüberliegenden Längsträger übertragen werden kann. Wesentlich für diese Kraftübertragung auf den gegenüberliegenden Längsträger soll hierbei die Anbindung des Versteifungselementes an beiden gegenüberliegenden Hilfsrahmen-Längsträgern jeweils vor und hinter den Lagerböcken sein.

Ein ähnlicher Aufbau ist auch aus der EP 0 891 915 B1 bekannt, bei der das flächige Versteifungselement ebenfalls über vier Anbindungspunkte insgesamt verfügt und bei der jeweils zwei Anbindungspunkte an den gegenüberliegenden Hilfsrahmen-Längsträgern liegen. Das Versteifungselement ist hier durch eine Blechplatte gebildet, das zur weiteren Versteifung auch noch Rippen oder Sicken aufweisen kann. Ein derartiges durch Sicken versteiftes Blech als flächiges Versteifungselement ist auch aus der DE-AS 1274899 bekannt.

Aufgabe der Erfindung ist es, einen als Fahrschemel ausgebildeten Hilfsrahmen für Kraftfahrzeuge mit einem flächigen Versteifungselement zwischen seitlichen Hilfsrahmen-Längsträgern zu schaffen, mit dem eine noch bessere Versteifung des Hilfsrahmens und damit der Karosserie selbst möglich ist.

Diese Aufgabe wird gelöst mit den Merkmalen des Anspruchs 1.

Erfindungsgemäß ist das flächige Versteifungselement dreiecksförmig ausgebildet, wobei das Versteifungselement im am Hilfsrahmen montierten Zustand mit einem ersten Dreiecksspitzenbereich an dem Hilfsrahmen-Querträger, mit einem zweiten Dreiecksspitzenbereich an dem ersten Hilfsrahmen-Längsträger und mit einem dritten Dreiecksspitzenbereich an dem zweiten Hilfsrahmen-Längsträger angebunden ist. Wie erfinderseitige Versuche gezeigt haben, ergibt sich mit einer derartigen Dreieckskonstruktion eine hervorragende Versteifung des Hilfsrahmens unter Ausbildung eines Schubfeldes, mittels dem beispielsweise aufprallbedingte Kräfte oder aber auch im normalen Fahrbetrieb auftretende Betriebskräfte, insbesondere Lenkerkräfte, die in einen der Längsträger eingeleitet werden, in gewünschter Weise auf den jeweils gegenüberliegenden Längsträger übertragen werden können. Dies wird insbesondere auch durch die Anbindung des einen, ersten Dreiecksspitzenbereichs am Hilfsrahmen-Querträger ermöglicht.

Insgesamt gesehen wird somit mit der erfindungsgemäßen Dreieckskonstruktion des Versteifungselementes eine Konstruktion geschaffen, mit der eine "fachwerkartige" Versteifung zwischen den beiden längsträgerseitigen Anbindungspunkten einerseits sowie zwischen den querträgerseitigen und längsträgerseitigen Anbindungspunkten andererseits ausgebildet wird. Dadurch wird wiederum in einem den Hilfsrahmen-Querträger sowie die Lenkerkonsolen umfassenden Hilfsrahmenabschnitt ein solches, in sich starres Gebilde ausgebildet, das sich aufgrund einer Ausbildung von in sich steifen und unverschieblichen "Dreiecken" unabhängig von der Art der z. B. gegensinnig oder gleichsinnig an den Lenkerkonsolen angreifenden Kräften nicht mehr verschieben oder verbiegen kann.

Besonders bevorzugt ist hierbei vorgesehen, dass die Anbindungspunkte des zweiten und dritten Dreiecksspitzenbereichs an den Hilfsrahmen-Längsträgern eines Vorderwagens in Fahrtrichtung gesehen hinter dem Anbindungspunkt des ersten Dreiecksspitzenbereichs am Hilfsrahmen-Querträger liegen. Bei einem Hilfsrahmen im Bereich der Hinterachsen liegen die Anbindungspunkte dagegen in analoger Weise in Fahrtrichtung gesehen vor dem Anbindungspunkt des ersten Dreiecksspitzenbereichs am Hilfsrahmen-Querträger.

Besonders günstige Kraftverhältnisse ergeben sich, wenn das Versteifungselement mit dem ersten Dreiecksspitzenbereich an einem bezogen auf die Querträger-Erstreckungsrichtung zwischen den beiden Hilfsrahmen-Längsträgern mittleren Querträgerbereich angebunden ist. Bevorzugt erfolgt die Anbindung hier an einem für die Montage einfach und gut zugänglichen Querträger-Unterseitenbereich.

Gemäß einer weiteren besonders bevorzugten Ausgestaltung ist vorgesehen, dass das Versteifungselement mit dem zweiten und dritten Dreiecksspitzenbereich an in Fahrzeugquerrichtung gegenüberliegenden Hilfsrahmen-Längsträgerbereichen angebunden ist, wobei die gegenüberliegenden Hilfsrahmen-Längsträgerbereiche bevorzugt durch hilfsrahmenseitige Konsolen und hier insbesondere durch die Lenkerkonsolen gebildet sind. Derartige Konsolen sind ohnehin an den Hilfsrahmen-Längsträgern vorzusehen, so dass diese in einer vorteilhaften Doppelfunktion gleichzeitig auch als Anbindungsstellen für das eine Dreiecksform aufweisende erfindungsgemäße flächige Versteifungselement ausbilden. Auch hier erfolgt für eine einfache und gute Zugänglichkeit im Rahmen der Montage die Anbindung bevorzugt wieder von der Unterseite der Konsolen, insbesondere Lenkerkonsolen her.

Das Versteifungselement weist bevorzugt die Form eines gleichschenkligen Dreiecks auf, dessen Spitze den am Hilfsrahmen-Querträger angebundenen ersten Dreiecksspitzenbereich ausbildet, währenddessen die gleich langen Schenkel geradlinig zwischen dem ersten Dreiecksspitzenbereich und dem zweiten Dreiecksspitzenbereich bzw. dem ersten Dreiecksspitzenbereich und dem dritten Dreiecksspitzenbereich verlaufen. Grundsätzlich bestünde aber auch die Möglichkeit, die Dreiecksseiten zwischen den einzelnen Anbindungsstellen bzw. Dreiecksspitzenbereichen mit Einschnürungen oder dergleichen auszubilden. Auf jeden Fall ist das flächige Versteifungselement so auszubilden, dass wenigstens der am Hilfsrahmen montierte Bereich der Lenkungsbauteile von unten her überdeckt wird.

Grundsätzlich kann das flächige Versteifungselement durch eine dünne Blechplatte gebildet sein, die ggf. mit Sicken oder Rippen versteift ist. In einem derartigen Fall ist es auch besonders vorteilhaft, wenn das Versteifungselement randseitig abgestellt ist, und dann dieser abgestellte Rand nochmals umgestellt ist, um ein vorteilhaftes "Hutprofil" auszubilden. Alternativ kann das flächige Versteifungselement jedoch auch mehrschichtig mit wenigstens einer Energieabsorptionsschicht ausgebildet sein. Besonders bevorzugt ist hierbei eine Ausgestaltung, bei der das flächige Versteifungselement als Sandwichbauteil mit einer plattenartigen Oberschale und einer plattenartigen Unterschale sowie mit einer zwischen der Oberschale und der Unterschale angeordneten Energieabsorptionsschicht ausgebildet ist. Mit einem derartigen Aufbau lässt sich eine besonders vorteilhafte Energieabsorption erreichen, da mittels der Energieabsorptionsschicht des flächigen Versteifungselementes eine besonders vorteilhafte Energieabsorption in Verbindung mit aufprallbedingten Krafteinleitungen möglich wird, die das Crashverhalten des Kraftfahrzeugs, z. B. im Vorderwagenbereich, günstig und positiv beeinflussen. Des weiteren bildet ein derartiges mehrlagiges, flächiges Versteifungselement auch einen besonders vorteilhaften Schutz für darüber liegende Bauteile aus, insbesondere für Bauteile einer Lenkungsvorrichtung, wie z. B. Leitungen, Hydraulikanschlüsse, Verschraubungen, Sensoren bzw. auch dem Ventildom selbst, da es z. B. in Verbindung mit sogenannten "Aufsetzern" des Kraftfahrzeugs aufgrund der Energieabsorption durch das Versteifungselement regelmäßig lediglich zu einer Verformung des Versteifungselementes kommt, so dass die auftretenden Kräfte gewissermaßen nicht bis zur Karosseriestruktur durchschlagen.

Des weiteren kann mit einem derartigen Sandwichbauteil auch das Eigenschwingverhalten des Hilfsrahmens in positiver und günstiger Weise beeinflusst werden.

Gemäß einer weiteren besonders bevorzugten konkreten Ausgestaltung kann die Oberschale und/oder die Unterschale zur Ausbildung einer wannenartigen Aufnahmeschale für die Energieabsorptionsschicht einen randseitig wenigstens bereichsweise umlaufenden Randsteg aufweisen. Dies kann grundsätzlich auch bei beiden Schalen der Fall sein, die dann im Bereich der freien Randstegenden miteinander in einer Anlageverbindung anliegen. Bevorzugt ist jedoch eine Ausführungsform, bei der lediglich eine der beiden Schalen, z. B. die Unterschale als Bodenschale bzw. Bodenplatte einen Randsteg aufweist, deren Höhe in etwa der Schichtstärke der Energieabsorptionsschicht entspricht. Dadurch wird erreicht, dass das freie Randstegende an einem Randbereich der anderen plattenartigen Schale, im zuvor genannten Beispiel der Oberschale, angrenzt und mit dieser verbindbar ist, z. B. mittels einer Klebeverbindung oder dergleichen.

In Verbindung mit einer derartigen Ausführungsform ist es auch besonders vorteilhaft, wenn die Energieabsorptionsschicht formschlüssig in der einen wenigstens bereichsweise umlaufenden Randsteg aufweisenden Schale aufgenommen ist, um ein insgesamt kompaktes und optimal auf die jeweiligen Versteifungsverhältnisse abgestimmtes Versteifungselement als Sandwichbauteil auszubilden. Grundsätzlich bestünde jedoch auch die Möglichkeit, dass sich die Energieabsorptionsschicht lediglich über einen Teilbereich der beiden Schalen erstreckt.

Der Aufbau des flächigen Versteifungselementes als Sandwichbauteil ist insbesondere im Hinblick auf ein extrem leichtes und damit nach wie vor gewichtsgünstig aufgebautes Strukturbauteil so dimensioniert, dass die Oberschale und die Unterschale eine gegenüber der Schichtstärke der Energieabsorptionsschicht dünnere Wandstärke aufweisen.

Die Energieabsorptionsschicht kann grundsätzlich auch durch einen Energieabsorptionsschaum gebildet sein. Besonders bevorzugt ist jedoch eine Energieabsorptionsschicht mit einer Wabenstruktur als Wabenstrukturschicht, die in Verbindung mit einem flächigen Versteifungselement besonders günstige Energieabsorptionseigenschaften aufweist. Die Wabenstruktur ist bevorzugt gleichmäßig ausgebildet, z. B. in Verbindung mit sechseckförmigen Waben. Ein weiterer wesentlicher Vorteil einer derartigen Wabenstruktur als Energieabsorptionsschicht ist, dass die Wabenstruktur zusammen mit den vorgesehenen Trägerschalen, bevorzugt einer Oberschale und einer Unterschale, in Leichtbauweise, z. B. aus einem Leichtmetallwerkstoff hergestellt werden können, so dass sich ein extrem leichter Aufbau des Versteifungselementes bei gleichzeitig hoher Steifigkeit erzielen lässt. Als Leichtbauwerkstoff für das Sandwichbauteil eignet sich insbesondere Aluminium. Grundsätzlich könnten jedoch auch Kunststoffe bzw. Verbundwerkstoffe, insbesondere faserverstärkte Kunststoffe oder kohlefaserverstärkte Verbundwerkstoffe als Leichtbauwerkstoffe verwendet werden.

Um die Montage bzw. Demontage von Bauteilen am Hilfsrahmen zu ermöglichen, ist es gemäß einer besonders bevorzugten Ausgestaltung vorteilhaft, dass das flächige Versteifungselement lösbar am Hilfsrahmen festgelegt ist. Diese Festlegung erfolgt vorzugsweise mittels mehrerer Schraubverbindungen, wozu am flächigen Versteifungselement eine vorgegebene Anzahl von Schraubendurchgangslöchern ausgebildet ist. Diesen Schraubendurchgangslöchern ist dann am Hilfsrahmen wiederum jeweils ein Schraubpunkt mit Schraubenmuttern zugeordnet, in die die Befestigungsschrauben zur lösbaren Festlegung des Versteifungselementes am Hilfsrahmen von der Unterschalenseite her einschraubbar sind. Eine derartige lösbare Festlegung mittels Schraubverbindungen ist besonders einfach und auch funktionssicher herzustellen.

Besonders bevorzugt sind die Schraubendurchgangslöcher am Versteifungselement im Bereich lokaler Einzüge ausgebildet, in denen die Schraubenköpfe der Befestigungsschrauben im eingeschraubten Zustand aufgenommen sind. Die Schraubenköpfe sind in Verbindung mit einem Sandwichbauteil als Versteifungselement vorzugsweise vollständig in den Unterschaleneinzügen aufgenommen, damit diese nicht über die Unterschale hervorstehen. Die lokalen Unterschaleneinzüge können gemäß einer weiteren bevorzugten und konkreten Ausgestaltung der Erfindung ferner so ausgebildet sein, dass ein Einzugsbodenbereich der lokalen Unterschaleneinzüge unter Ausbildung einer das Schraubendurchgangsloch umgebenden Schraubenkopfauflage in einer Anlageverbindung an der Oberschale anliegt. Dadurch lässt sich eine besonders günstige Verschraubung und damit Festlegung des Sandwichbauteils am Hilfsrahmen erzielen.

Obwohl die durchgehend flächige Ausgestaltung des Versteifungselementes als flächiges Versteifungselement die bevorzugte Ausgestaltung ist, ist es grundsätzlich auch möglich, am Versteifungselement wenigstens eine Fensterausnehmung vorzusehen, insbesondere in einem zentralen Dreiecksbereich, so dass ein in etwa rahmenartiger Aufbau des Versteifungselementes erzielt wird. Auch mit einem derartigen rahmenartigen Dreiecksaufbau lässt sich die zuvor beschriebene erfindungsgemäße Versteifung des Hilfsrahmens uneingeschränkt erzielen, lediglich mit dem Unterschied, dass kein durchgehender Unterbodenschutz mehr ausgebildet wird. Diese Einschränkung ist jedoch gegebenenfalls hinzunehmen, z. B. auch in Verbindung mit anderen Unterbodenschutzmaßnahmen.

Die Erfindung wird nachfolgend anhand einer Zeichnung näher erläutert.

Es zeigen:
- Fig. 1: eine schematische, perspektivische Draufsicht auf einen Hilfsrahmen mit montiertem Lenkgetriebe und erfindungsgemäßem Versteifungselement,
- Fig. 2: eine schematische, perspektivische Unteransicht des Hilfsrahmens vor der Montage des erfindungsgemäßen Versteifungselementes,
- Fig. 3: eine schematische, perspektivische Darstellung entsprechend Fig. 2 mit montiertem Versteifungselement,
- Fig. 4: eine schematische Schnittansicht entlang der Linie A-A der Fig. 3,
- Fig. 5: eine vergrößerte Detailansicht eines Konsolen- und Anbindungsbereiches eines Hilfsrahmen-Längsträgers,
- Fig. 6: eine schematische Prinzipdarstellung der erfindungsgemäßen Hilfsrahmen-Versteifung,
- Fig. 7: eine schematische Prinzipdarstellung ohne erfindungsgemäßes Versteifungselement und gegensinnigem Kraftangriff an Lenkerkonsolen,
- Fig. 8: eine schematische Prinzipdarstellung ohne erfindungsgemäßes Versteifungselement und gleichsinnigem Kraftangriff an Lenkerkonsolen,
- Fig. 9: eine schematische Draufsicht auf ein erfindungsgemäßes Versteifungselement, und
- Fig. 10: ein schematischer Querschnitt entlang der Linie B-B der Fig. 9.

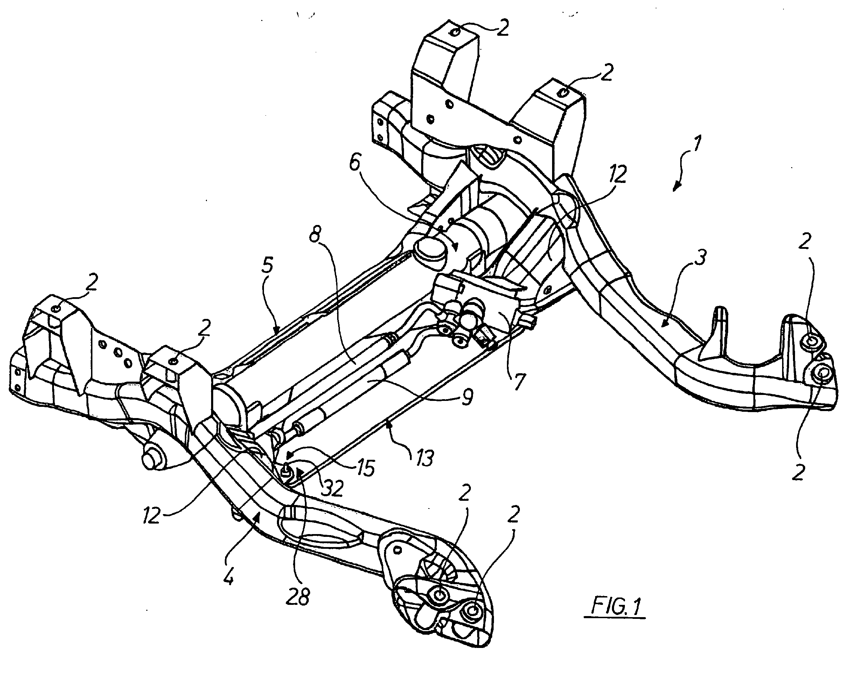

In der **Fig. 1** ist schematisch und beispielhaft ein als Fahrschemel ausgebildeter Hilfsrahmen 1 für ein Kraftfahrzeug gezeigt, der über die Anbindungspunkte 2 mit karosserieseitigen Längsträgern im Vorderwagenbereich des Kraftfahrzeuges angebunden werden kann, was hier jedoch nicht dargestellt ist. Der Hilfsrahmen 1 weist weiter zwei seitliche Hilfsrahmen-Längsträger 3 und 4 auf, die mittels eines Hilfsrahmen-Querträgers 5 miteinander verbunden sind.

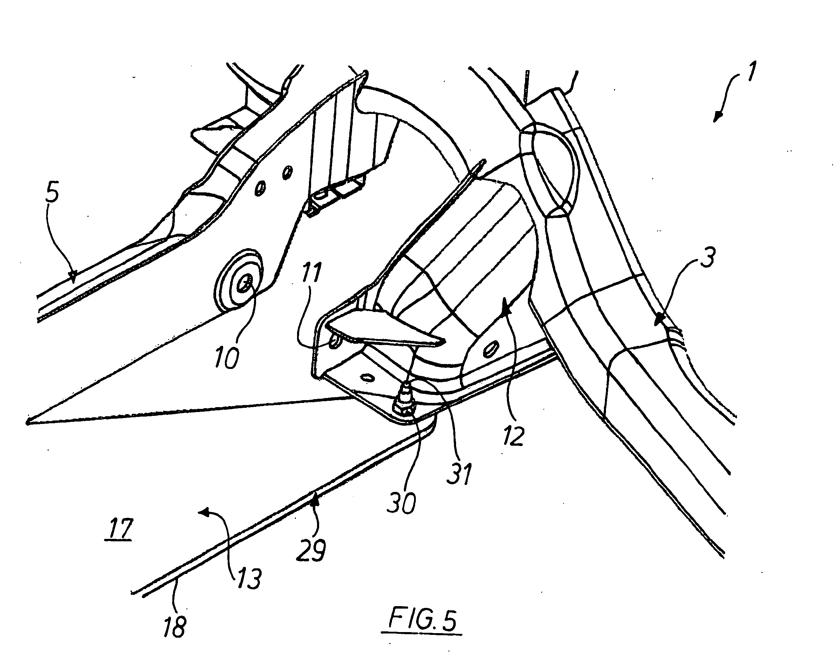

Der Hilfsrahmen 1 ist hier mit bereits montierten Lenkungsbauteilen einer als Rechtslenker ausgebildeten Lenkungsvorrichtung gezeigt, wobei hier nur beispielhaft ein Lenkgetriebe 6, ein Ventildom 7 sowie Hydraulikleitungen 8, 9 beispielhaft erwähnt werden sollen. Wie dies im Detail der **Fig. 5** entnommen werden kann, die eine vergrößerte Detailansicht eines Teilbereichs des in der Bildebene der **Fig. 1** rechten Hilfsrahmen-Längsträgers 3 zeigt, erfolgt die Festlegung des Lenkgetriebes 6 an den beiden Befestigungsstellen 10 und 11, wobei die erste Befestigungsstelle 10 am Hilfsrahmen-Querträger 5 und die zweite Befestigungsstelle 11 an einer Lenkerkonsole 12 ausgebildet ist.

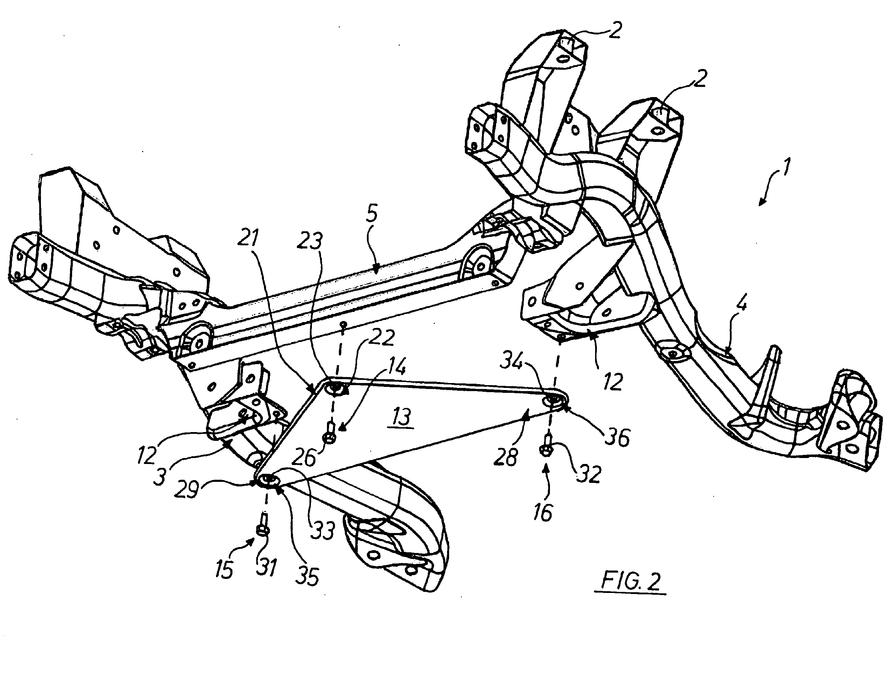

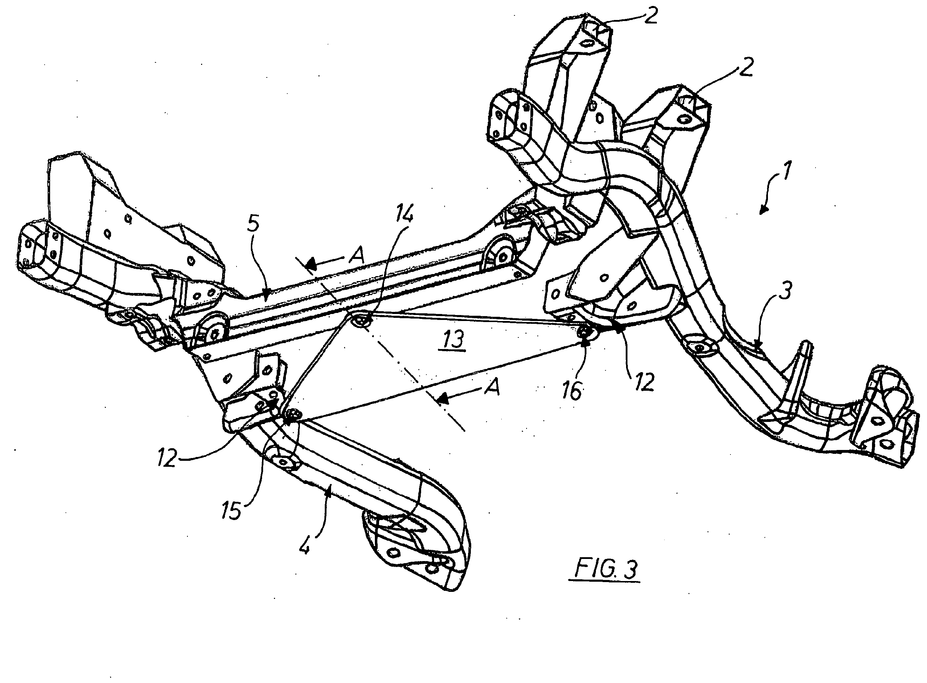

Wie dies der **Fig. 1** und insbesondere auch den **Fig. 2** **und** **3** entnommen werden kann, ist am Hilfsrahmen 1 ferner noch von unten her ein in der Form eines gleichschenkligen Dreiecks ausgebildetes Sandwichbauteil 13 als flächiges Versteifungselement mittels dreier eckseitig angeordneter Schraubverbindungen 14, 15 und 16 lösbar befestigt.

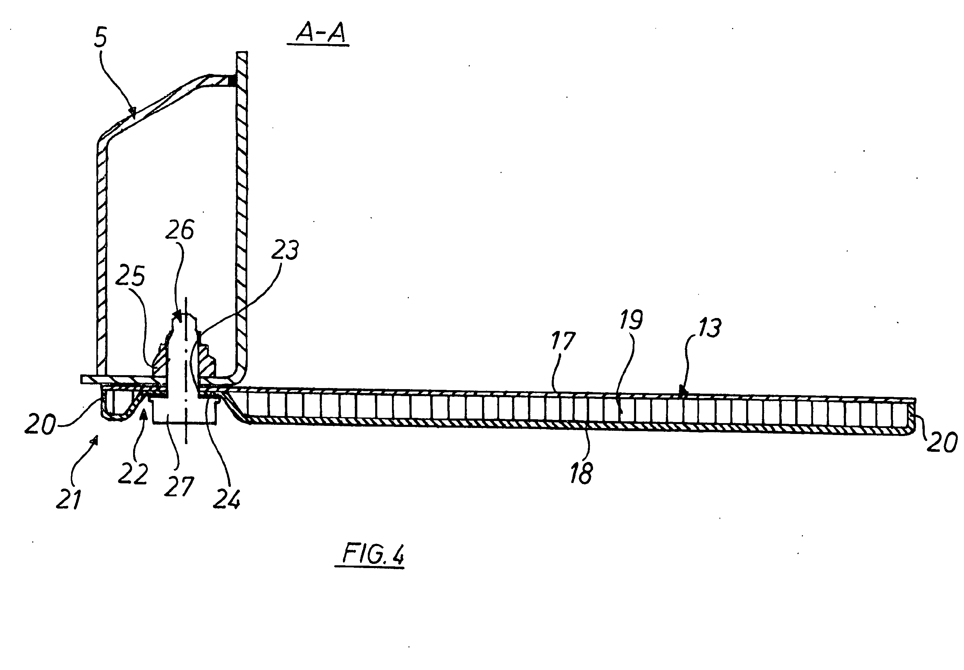

Wie dies der **Fig. 4****,** die einen Schnitt entlang der Linie A-A der **Fig. 3** zeigt, entnommen werden kann, ist das Sandwichbauteil 13 aus einer dünnwandigen, z. B. 1 bis 2 mm starken Oberschale 17 als Deckplatte, einer dünnwandigen, z. B. 1 bis 2 mm starken Unterschale 18 als Bodenplatte und einer zwischen der Oberschale 17 und der Unterschale 18 formschlüssigen Wabenstrukturschicht 19 als Energieabsorptionsschicht ausgebildet. Die Unterschale 18 ist randseitig umlaufend mit einem Randsteg 20 versehen, dessen Höhe der Schichtstärke der Wabenstruktur 19 entspricht, um eine wannenartige Aufnahmeschale für die Wabenstruktur 19 auszubilden. Die Oberschale 17 ist hier durchgehend plattenförmig und eben ausgebildet und liegt randseitig auf dem freien Ende des Randstegs 20 der Unterschale 18 auf. In diesem Bereich sind die Oberschale 17 und die Unterschale 18 miteinander verbunden, z. B. mittels einer Klebeverbindung. Die Wabenstruktur 19 ist z. B. als gleichmäßige Wabenstruktur mit z. B. Sechseckwaben ausgebildet.

Wie dies der **Fig. 4** weiter entnommen werden kann, weist das Sandwichbauteil 13 am dem Hilfsrahmen-Querträger 5 zugeordneten ersten Dreiecksspitzenbereich 21 einen Unterschaleneinzug 22 auf, der so ausgebildet ist, dass ein Einzugsbodenbereich unter Ausbildung einer ein Schraubendurchgangsloch 23 umgebenden Schraubenkopfauflage 24 in einer Anlageverbindung an der Oberschale 17 anliegt. Wie dies der **Fig. 4** entnommen werden kann, ist die Wabenstruktur 19 im Bereich des Unterschaleneinzugs 22 ausgespart.

Zur lösbaren Befestigung des Sandwichbauteils 13 am Hilfsrahmen-Querträger 5 ist in diesem eine Schraubenmutter 25 ortsfest angeordnet, in die von der Unterschale 18 her eine Befestigungsschraube 26 so lange eingeschraubt wird, bis deren Schraubenkopf 27 an der Schraubenkopfauflage 24 anliegt und mit einem vorgegebenen Anzugsmoment angezogen ist.

Die Festlegung des Sandwich-Versteifungselementes bzw. Sandwichbauteils 13 im Bereich der beiden querträgerfernen zweiten und dritten Dreiecksspitzenbereiche 28, 29 erfolgt in analoger Weise und ist beispielhaft für den in der Bildebene der **Fig. 1** rechten Hilfsrahmen-Längsträger 3 in der **Fig. 5** dargestellt. Dort ist an der Lenkerkonsole 12 eine Schraubenmutter 30 fest angeordnet, in die von unten her eine Befestigungsschraube 31 eingeschraubt werden kann. Die Festlegung des Sandwichbauteils 13 am in der Bildebene der **Fig. 1** linken Hilfsrahmen-Längsträger 4 erfolgt in analoger Weise mittels einer Befestigungsschraube 32, die schematisch lediglich in der **Fig. 2** **und** **3** gezeigt ist.

Wie dies insbesondere aus der **Fig. 2** ersichtlich ist, sind die Schraubendurchgangslöcher 33, 34 in den Dreiecksspitzenbereichen 28, 29 in analoger Weise in Verbindung mit einem Unterschaleneinzug 35, 36 ausgebildet.

Gemäß einer besonders bevorzugten Ausgestaltung ist sowohl die Oberschale 17 als auch die Unterschale 18 und die Wabenstruktur 19 aus einem Leichtmetall, insbesondere aus Aluminium hergestellt.

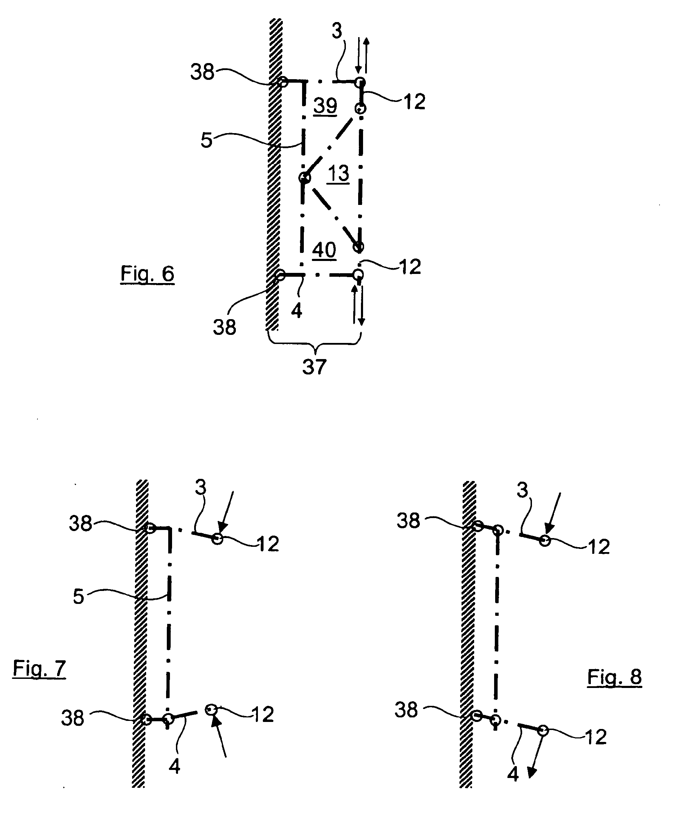

Die Wirkungsweise der erfindungsgemäßen, dreiecksförmigen Versteifung ist schematisch als Prinzipdarstellung in der **Fig. 6** dargestellt, bei der lediglich ein mittlerer Hilfsrahmenabschnitt 37 und damit lediglich ein Teilbereich der Hilfsrahmen-Längsträger 3 und 4 im Bereich des Hilfsrahmen-Querträgers 5 und der Lenkerkonsolen 12 gezeigt ist. Unter Annahme der durch das Bezugszeichen 38 lediglich schematisch dargestellten festen Einspannung wird hier in Verbindung mit dem dreiecksförmigen Versteifungselement 13 ein insgesamt starrer Aufbau geschaffen, der aus gegeneinander unverschieblichen, steifen "Dreiecken" 13, 39 und 40 aufgebaut ist. Die "Dreiecke" 39 und 40 und sind hier real dann "Luftbereiche". Unabhängig davon, ob die im Bereich der Lenkerkonsole angreifenden Lenkerkräfte gegensinnig oder gleichsinnig eingeleitet werden verschiebt und verbiegt sich ein derartiger erfindungsgemäßer Aufbau nicht.

Wie dies zum Vergleich und zur Verdeutlichung des eben Gesagten in der Fig. 7 lediglich schematisch dargestellt ist, kommt es nämlich ohne die erfindungsgemäße dreiecksförmige Versteifung bei einem gegensinnigen Kraftangriff im Bereich der Lenkerkonsolen 12 zu einer nach innen gerichteten Verbiegung der Längsträger 3 bzw. 4 bzw., wie dies in der Fig. 8 dargestellt ist, bei gleichsinnigem Kraftangriff zur Verschiebung in der Art eines Viergelenks. Beides ist unerwünscht und wird durch die erfindungsgemäße Dreieckskonstruktion vermieden.

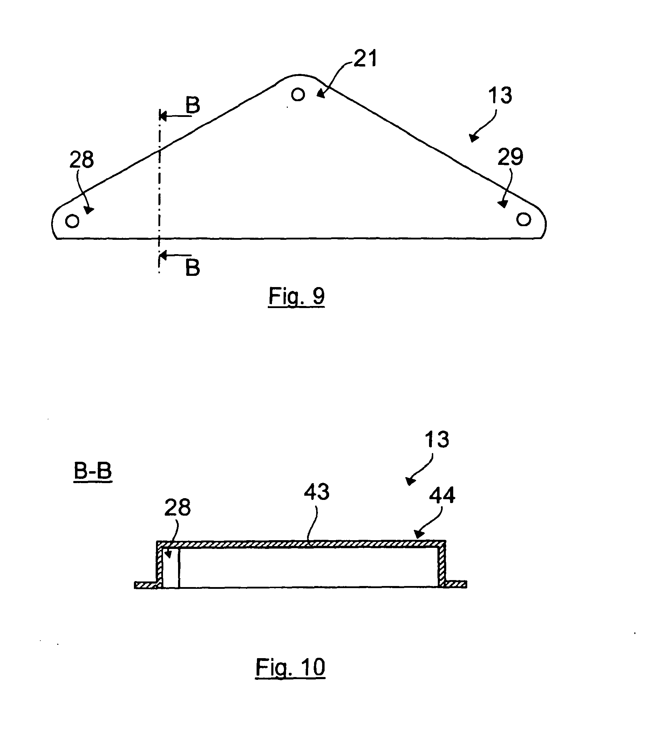

In der **Fig. 9** ist eine schematische Draufsicht auf das Versteifungselement 13 gezeigt und in der Fig. 10 ein Schnitt entlang der Linie B-B der Fig. 9. Das Versteifungselement ist hier durch eine dünne Blechplatte 43 gebildet, welches randseitig so ab- und umgestellt ist, dass ein Hutprofil 44 ausgebildet wird. In der Fig. 10 ist schematisch ferner noch der Dreiecksspitzenbereich 28 schematisch dargestellt.

## Patentansprüche

1. Als Fahrschemel ausgebildeter Hilfsrahmen für Kraftfahrzeuge,
mit seitlichen Hilfsrahmen-Längsträgern als erste und zweite Hilfsrahmen-Längsträger, zwischen denen ein Hilfsrahmen-Querträger verläuft und zwischen denen ein flächiges Versteifungselement anordenbar ist,
**dadurch gekennzeichnet,**
**dass** das flächige Versteifungselement (13) dreiecksförmig ausgebildet ist dergestalt, dass das Versteifungselement (13) im am Hilfsrahmen (1) montierten Zustand mit einem ersten Dreiecksspitzenbereich (21) an dem Hilfsrahmen-Querträger (5), mit einem zweiten Dreiecksspitzenbereich (28) an dem ersten Hilfsrahmen-Längsträger (4) und mit einem dritten Dreiecksspitzenbereich (29) an dem zweiten Hilfsrahmen-Längsträger (3) angebunden ist.

2. Hilfsrahmen nach Anspruch 1, **dadurch gekennzeichnet, dass** die Anbindungspunkte des zweiten und dritten Dreiecksspitzenbereichs (28, 29) an den Hilfsrahmen-Längsträgern (3, 4) eines Vorderwagens in Fahrtrichtung gesehen hinter dem Anbindungspunkt des ersten Dreiecksspitzenbereichs (21) am Hilfsrahmen-Querträger (5) liegen.

3. Hilfsrahmen nach Anspruch 1 oder 2, **dadurch gekennzeichnet, dass** das Versteifungselement (13) mit dem ersten Dreiecksspitzenbereich (21) an einem bezogen auf die Querträger-Erstreckungsrichtung zwischen den beiden Hilfsrahmen-Längsträgern (3, 4) mittleren Querträgerbereich, insbesondere Querträger-Unterseitenbereich, angebunden ist.

4. Hilfsrahmen nach einem der Ansprüche 1 bis 3, **dadurch gekennzeichnet, dass** das Versteifungselement (13) mit dem zweiten und dritten Dreiecksspitzenbereich (28, 29) an in Fahrzeugquerrichtung gegenüberliegenden Hilfsrahmen-Längsträgerbereichen (12) angebunden ist.

5. Hilfsrahmen nach Anspruch 4, **dadurch gekennzeichnet, dass** die gegenüberliegenden Hilfsrahmen-Längsträgerbereiche (12) durch hilfsrahmenseitige Konsolen, insbesondere Lenkerkonsolen, gebildet sind.

6. Hilfsrahmen nach einem der Ansprüche 1 bis 5, **dadurch gekennzeichnet, dass** das Versteifungselement (13) wenigstens den Bereich der am Hilfsrahmen (1) montierten Lenkungsbauteile (6, 7, 8, 9) von unten her überdeckt.

7. Hilfsrahmen nach einem der Ansprüche 1 bis 6, **dadurch gekennzeichnet, dass** das Versteifungselement (13) die Form eines gleichschenkligen Dreiecks aufweist, dessen Spitze den am Hilfsrahmen-Querträger (5) angebundenen ersten Dreiecksspitzenbereich (21) ausbildet und dessen gleich lange Schenkel geradlinig zwischen dem ersten Dreiecksspitzenbereich (21) und dem zweiten Dreiecksspitzenbereich (28) bzw. dem ersten Dreiecksspitzenbereich (21) und dem dritten Dreiecksspitzenbereich (29) verlaufen.

8. Hilfsrahmen nach einem der Ansprüche 1 bis 7, **dadurch gekennzeichnet, dass** das Versteifungselement (13) wenigstens bereichsweise randseitig abgestellt ist, insbesondere zur Ausbildung eines Hutprofilquerschnitts randseitig abgestellt und wieder umgestellt ist.

9. Hilfsrahmen nach einem der Ansprüche 1 bis 8, **dadurch gekennzeichnet, dass** das Versteifungselement (13) durch eine Blechplatte gebildet ist.

10. Hilfsrahmen nach einem der Ansprüche 1 bis 7, **dadurch gekennzeichnet, dass** das Versteifungselement (13) mehrschichtig ausgebildet ist und wenigstens eine der Schichten (17, 18, 19) als Energieabsorptionsschicht (19) ausgebildet ist.

11. Hilfsrahmen nach Anspruch 10, **dadurch gekennzeichnet, dass** das Versteifungselement (13) als Sandwichbauteil mit einer plattenartigen Oberschale (17) und einer plattenartigen Unterschale (18) sowie mit einer zwischen der Oberschale (17) und der Unterschale (18) angeordneten Energieabsorptionsschicht (19) ausgebildet ist.

12. Hilfsrahmen nach Anspruch 11, **dadurch gekennzeichnet, dass** die Oberschale (17) und/oder die Unterschale (18) zur Ausbildung einer wannenartigen Aufnahmeschale für die Energieabsorptionsschicht (19) einen randseitig wenigstens bereichsweise umlaufenden Randsteg (20) aufweist.

13. Hilfsrahmen nach Anspruch 12, **dadurch gekennzeichnet, dass** lediglich eine der beiden Schalen (18) einen Randsteg (20) aufweist, dessen Höhe in etwa der Schichtstärke der Energieabsorptionsschicht (19) entspricht, so dass das freie Randstegende an einem Randbereich der anderen plattenartigen Schale (17) angrenzt und mit diesem verbindbar ist.

14. Hilfsrahmen nach Anspruch 12 oder Anspruch 13, **dadurch gekennzeichnet, dass** die Energieabsorptionsschicht (19) formschlüssig in der einen wenigstens bereichsweise umlaufenden Randsteg (20) aufweisenden Schale (18) und/oder zwischen der Oberschale (17) und der Unterschale (18) aufgenommen ist.

15. Hilfsrahmen nach einem der Ansprüche 11 bis 14, **dadurch gekennzeichnet, dass** die Oberschale (17) und die Unterschale (18) eine gegenüber der Schichtstärke der Energieabsorptionsschicht (19) dünnere Wandstärke aufweisen.

16. Hilfsrahmen nach einem der Ansprüche 10 bis 15, **dadurch gekennzeichnet, dass** die Energieabsorptionsschicht durch eine Wabenstruktur als Wabenstrukturschicht (19) ausgebildet ist.

17. Hilfsrahmen nach einem der Ansprüche 11 bis 16, **dadurch gekennzeichnet, dass** die als Wabenstrukturschicht (19) ausgebildete Energieabsorptionsschicht und/oder die Oberschale (17) und/oder die Unterschale (18) aus einem Leichtmetall, insbesondere Aluminium, und/oder aus einem Kunststoff, insbesondere einem faserverstärkten Kunststoff, und/oder aus einem Verbundwerkstoff, insbesondere einem kohlefaserverstärkten Verbundwerkstoff ausgebildet ist.

18. Hilfsrahmen nach einem der Ansprüche 1 bis 17, **dadurch gekennzeichnet, dass** das Versteifungselement (13) mittels Schraubverbindungen lösbar am Hilfsrahmen (1) festlegbar ist.

19. Hilfsrahmen nach einem der Ansprüche 1 bis 18, **dadurch gekennzeichnet, dass** am Versteifungselement (13) eine vorgegebene Anzahl von Schraubendurchgangslöchern (23, 33, 34) ausgebildet ist, denen am Hilfsrahmen (1) jeweils Schraubpunkte mit Schraubenmuttern (25, 30) zugeordnet sind, in die Befestigungsschrauben (26, 31, 32) zur lösbaren Festlegung des Versteifungselementes (13) am Hilfsrahmen (1) einschraubbar sind.

20. Hilfsrahmen nach Anspruch 19, **dadurch gekennzeichnet, dass** am Versteifungselement (13) Schraubendurchgangslöcher (23, 33, 34) im Bereich lokaler Einzüge (22, 35, 36) ausgebildet sind, in denen Schraubenköpfe (27) von Befestigungsschrauben (26, 31, 32) im eingeschraubten Zustand aufgenommen sind.

21. Hilfsrahmen nach einem der Ansprüche 1 bis 20, **dadurch gekennzeichnet, dass** im Versteifungselement (13) wenigstens eine Fensterausnehmung, insbesondere in einem zentralen Dreiecksbereich ausgebildet ist.

22. Flächiges Versteifungselement für einen als Fahrschemel ausgebildeten Hilfsrahmen für Kraftfahrzeuge nach einem der Ansprüche 1 bis 21, **dadurch gekennzeichnet,**
**dass** das flächige Versteifungselement (13) dreiecksförmig ausgebildet ist dergestalt, dass das Versteifungselement (13) im am Hilfsrahmen (1) montierten Zustand mit einem ersten Dreiecksspitzenbereich (21) an dem Hilfsrahmen-Querträger (5), mit einem zweiten Dreiecksspitzenbereich (28) an dem ersten Hilfsrahmen-Längsträger (4) und mit einem dritten Dreiecksspitzenbereich (29) an dem zweiten Hilfsrahmen-Längsträger (3) angebunden ist.

## Claims

1. Auxiliary frame formed as a subframe for motor vehicles, with lateral auxiliary-frame side members as first and second auxiliary-frame side members between which an auxiliary-frame cross-member is disposed and between which a planar stiffening element can be arranged, **characterised in that** the planar stiffening element (13) has a triangular configuration such that, in the state mounted to the auxiliary frame (1), the stiffening element (13) is attached by a first triangle-point region (21) to the auxiliary frame cross-member (5), by a second triangle-point region (28) to the first auxiliary-frame side member (4) and by a third triangle-point region (29) to the second auxiliary-frame side member (3).

2. Auxiliary frame according to Claim 1, **characterised in that** the attachment points of the second and third triangle-point regions (28, 29) are located on the auxiliary-frame side members (3, 4) of a front end assembly behind the attachment point of the first triangle-point region (21) on the auxiliary-frame cross-member (5), viewed in the direction of travel.

3. Auxiliary frame according to Claim 1 or 2, **characterised in that** the stiffening element (13) is attached by the first triangle-point region (21), between the two auxiliary-frame side members (3, 4), to a middle region of the cross-member (5), in relation to the direction of extension of the cross-member, in particular to an underside region of the cross-member (5).

4. Auxiliary frame according to any one of Claims 1 to 3, **characterised in that** the stiffening element (13) is attached by the second and third triangle-point regions (28, 29) to opposite auxiliary-frame side member regions (12) in the transverse direction of the vehicle.

5. Auxiliary frame according to Claim 4, **characterised in that** the oppositely-located auxiliary-frame side member regions (12) are formed by auxiliary frame brackets, in particular steering rack brackets.

6. Auxiliary frame according to any one of Claims 1 to 5, **characterised in that** the stiffening element (13) covers from below at least the region of the steering components (6, 7, 8, 9) mounted on the auxiliary frame (1).

7. Auxiliary frame according to any one of Claims 1 to 6, **characterised in that** the stiffening element (13) has the form of an isosceles triangle, the apex of which forms the first triangle-point region (21) attached to the auxiliary-frame cross-member and the equal sides of which extend rectilinearly between the first triangle-point region (21) and the second triangle-point region (28), and between the first triangle-point region (21) and the third triangle-point region (29).

8. Auxiliary frame according to any one of Claims 1 to 7, **characterised in that** the edge of the stiffening element (13) is folded, in particular is folded and re-folded to form a hat-profile edge cross-section, at least zonally.

9. Auxiliary frame according to any one of Claims 1 to 8, **characterised in that** the stiffening element (13) is formed by a sheet-metal plate.

10. Auxiliary frame according to any one of Claims 1 to 7, **characterised in that** the stiffening element (13) has a multi-layer configuration and at least one of the layers (17, 18, 19) is configured as an energy-absorbing layer (19).

11. Auxiliary frame according to Claim 10, **characterised in that** the stiffening element (13) is configured as a sandwich component with a plate-like upper skin (17) and a plate-like lower skin (18) and with an energy-absorbing layer (19) arranged between the upper skin (17) and the lower skin (18).

12. Auxiliary frame according to Claim 11, **characterised in that** the edge of the upper skin (17) and/or of the lower skin (18) has at least zonally a peripheral edge flange (20) for forming a tub-like receiving shell for the energy-absorbing layer (19).

13. Auxiliary frame according to Claim 12, **characterised in that** only one of the two skins (18) has an edge flange (20), the height of which corresponds approximately to the thickness of the energy-absorbing layer (19), so that the free edge of the edge flange borders an edge region of the other plate-like skin (17) and is connectable thereto.

14. Auxiliary frame according to Claim 12 or Claim 13, **characterised in that** the energy-absorbing layer (19) is received in a form-fitting manner in the skin (18) which has at least zonally a peripheral edge flange (20) and/or between the upper skin (17) and the lower skin (18).

15. Auxiliary frame according to any one of Claims 11 to 14, **characterised in that** the upper skin (17) and the lower skin (18) have a thinner wall thickness, as compared to the layer-thickness of the energy-absorbing layer (19).

16. Auxiliary frame according to any one of Claims 10 to 15, **characterised in that** the energy-absorbing layer is formed by a honeycomb structure as a honeycomb-structure layer (19).

17. Auxiliary frame according to any one of Claims 11 to 16, **characterised in that** the energy-absorbing layer configured as a honeycomb-structure layer (19) and/or the upper skin (17) and/or the lower skin (18) is/are formed from a light metal, in particular aluminium, and/or from a plastics material, in particular a fibre-reinforced plastics material, and/or from a composite material, in particular a carbon-fibre reinforced composite material.

18. Auxiliary frame according to any one of Claims 1 to 17, **characterised in that** the stiffening element (13) is attachable releasably to the auxiliary frame (1) by means of screw connections.

19. Auxiliary frame according to any one of Claims 1 to 18, **characterised in that** a predetermined number of screw through-holes (23, 33, 34) is formed in the stiffening element (13), to each of which screw through-holes (23, 33, 34) screwing points with nuts (25, 30) on the auxiliary frame (1) are associated, into which screwing points fixing screws (26, 31, 32) are insertable for releasably fixing the stiffening element (13) to the auxiliary frame (1).

20. Auxiliary frame according to Claim 19, **characterised in that** screw through-holes (23, 33, 34) in the stiffening element (13) are formed in the region of local retreats (22, 35, 36) in which screw heads (27) of fixing screws (26, 31, 32) are received in the screwed-in state.

21. Auxiliary frame according to any one of Claims 1 to 20, **characterised in that** at least one window opening is formed in the stiffening element (13), in particular in a central region of the triangle.

22. Planar stiffening element for an auxiliary frame formed as a subframe for motor vehicles according to any one of Claims 1 to 21, **characterised in that** the planar stiffening element (13) has a triangular configuration such that, in the state mounted to the auxiliary frame (1), the stiffening element (13) is attached by a first triangle-point region (21) to the auxiliary frame cross-member (5), by a second triangle-point region (28) to the first auxiliary-frame side member (4) and by a third triangle-point region (29) to the second auxiliary-frame side member (3).

## Revendications

1. Châssis auxiliaire réalisé comme un faux-châssis pour véhicules automobiles, avec des longerons de châssis auxiliaire latéraux comme premiers et seconds longerons de châssis auxiliaire, entre lesquels s'étend une traverse de châssis auxiliaire et entre lesquels peut être disposé un élément de renforcement plan,
**caractérisé en ce**
**que** l'élément de renforcement (13) plan est réalisé en forme de triangle de telle manière que l'élément de renforcement (13) soit relié à l'état monté sur le châssis auxiliaire (1) avec une première zone de pointe triangulaire (21) sur la traverse de châssis auxiliaire (5), avec une deuxième zone de pointe triangulaire (28) sur le premier longeron de châssis auxiliaire (4) et avec une troisième zone de pointe triangulaire (29) sur le second longeron de châssis auxiliaire (3).

2. Châssis auxiliaire selon la revendication 1, **caractérisé en ce que** les points de liaison de la deuxième et troisième zones de pointe triangulaire (28, 29) se trouvent sur les longerons de châssis auxiliaire (3, 4) d'une partie avant de véhicule vu dans le sens de la marche, derrière le point de liaison de la première zone de pointe triangulaire (21) sur la traverse de châssis auxiliaire (5).

3. Châssis auxiliaire selon la revendication 1 ou 2, **caractérisé en ce que** l'élément de renforcement (13) est relié avec la première zone de pointe triangulaire (21) à une zone de traverse médiane par rapport au sens de développement de la traverse entre les deux longerons de châssis auxiliaire (3, 4), en particulier la zone de dessous de traverse.

4. Châssis auxiliaire selon l'une quelconque des revendications 1 à 3, **caractérisé en ce que** l'élément de renforcement (13) est relié avec la deuxième et troisième zones de pointe triangulaire (28, 29) aux zones de longeron de châssis auxiliaire (12) opposées dans le sens transversal du véhicule.

5. Châssis auxiliaire selon la revendication 4, **caractérisé en ce que** les zones de longeron de châssis auxiliaire (12) opposées sont formées par des consoles côté châssis auxiliaire, en particulier des consoles de bras oscillant.

6. Châssis auxiliaire selon l'une quelconque des revendications 1 à 5, **caractérisé en ce que** l'élément de renforcement (13) recouvre par le dessous au moins la zone des composants de direction (6, 7, 8, 9) montés sur le châssis auxiliaire (1).

7. Châssis auxiliaire selon l'une quelconque des revendications 1 à 6, **caractérisé en ce que** l'élément de renforcement (13) présente la forme d'un triangle isocèle, dont la pointe réalise la première zone de pointe triangulaire (21) reliée à la traverse de châssis auxiliaire (5) et dont les côtés de longueur identique s'étendent de manière rectiligne entre la première zone de pointe triangulaire (21) et la deuxième zone de pointe triangulaire (28) ou entre la première zone de pointe triangulaire (21) et la troisième zone de pointe triangulaire (29).

8. Châssis auxiliaire selon l'une quelconque des revendications 1 à 7, **caractérisé en ce que** l'élément de renforcement (13) est placé au moins par endroits côté bord, en particulier est placé côté bord pour la réalisation d'une section profilée en U renversé et de nouveau déplacé.

9. Châssis auxiliaire selon l'une quelconque des revendications 1 à 8, **caractérisé en ce que** l'élément de renforcement (13) est formé par une plaque de tôle.

10. Châssis auxiliaire selon l'une quelconque des revendications 1 à 7, **caractérisé en ce que** l'élément de renforcement (13) est réalisé en plusieurs couches et au moins l'une des couches (17, 18, 19) est réalisée sous forme d'une couche absorbant l'énergie (19).

11. Châssis auxiliaire selon la revendication 10, **caractérisé en ce que** l'élément de renforcement (13) est réalisé sous forme d'un composant sandwich avec une coque supérieure de type plaque (17) et une coque inférieure de type plaque (18) ainsi qu'avec une couche absorbant l'énergie (19) disposée entre la coque supérieure (17) et la coque inférieure (18).

12. Châssis auxiliaire selon la revendication 11, **caractérisé en ce que** la coque supérieure (17) et/ou la coque inférieure (18) présente pour la réalisation d'une coque de réception du genre cuvette pour la couche absorbant l'énergie (19), une nervure de bord (20) périphérique côté bord au moins par endroits.

13. Châssis auxiliaire selon la revendication 12, **caractérisé en ce que** juste l'une des deux coques (18) présente une nervure de bord (20), dont la hauteur correspond à peu près à l'épaisseur de la couche absorbant l'énergie (19) de sorte que l'extrémité de nervure de bord libre jouxte une zone de bord de l'autre coque (17) de type plaque et puisse être reliée à celle-ci.

14. Châssis auxiliaire selon la revendication 12 où 13, **caractérisé en ce que** la couche absorbant l'énergie (19) est logée par complémentarité de forme dans la coque (18) présentant une nervure de bord (20) périphérique au moins par endroits et/ou entre la coque supérieure (17) et la coque inférieure (18).

15. Châssis auxiliaire selon l'une quelconque des revendications 11 à 14, **caractérisé en ce que** la coque supérieure (17) et la coque inférieure (18) présentent une épaisseur de paroi plus mince par rapport à l'épaisseur de la couche absorbant l'énergie (19).

16. Châssis auxiliaire selon l'une quelconque des revendications 10 à 15, **caractérisé en ce que** la couche absorbant l'énergie est réalisée par une structure alvéolée sous forme d'une couche de structure alvéolée (19).

17. Châssis auxiliaire selon l'une quelconque des revendications 11 à 16, **caractérisé en ce que** la couche absorbant l'énergie réalisée sous forme d'une couche de structure alvéolée (19) et/ou la coque supérieure (17) et/ou la coque inférieure (18) est réalisée en un métal léger, en particulier en aluminium, et/ou en une matière plastique, en particulier une matière plastique renforcée par des fibres, et/ou en un matériau composite, en particulier un matériau composite renforcé par des fibres de carbone.

18. Châssis auxiliaire selon l'une quelconque des revendications 1 à 17, **caractérisé en ce que** l'élément de renforcement (13) peut être fixé de manière amovible au moyen d'assemblages vissés sur le châssis auxiliaire (1).

19. Châssis auxiliaire selon l'une quelconque des revendications 1 à 18, **caractérisé en ce qu'**un nombre prescrit de trous débouchants filetés (23, 33, 34) est réalisé sur l'élément de renforcement (13), auxquels sont associés sur le châssis auxiliaire (1) respectivement des points de vis avec des écrous (25, 30), dans lesquels des vis de fixation (26, 31, 32) peuvent être vissées pour la fixation amovible de l'élément de renforcement (13) sur le châssis auxiliaire (1).

20. Châssis auxiliaire selon la revendication 19, **caractérisé en ce que** des trous débouchants filetés (23, 33, 34) sont réalisés sur l'élément de renforcement (13) dans la zone d'introductions (22, 35, 36) locales, dans lesquelles des têtes (27) de vis de fixation (26, 31, 32) sont logées à l'état vissé.

21. Châssis auxiliaire selon l'une quelconque des revendications 1 à 20, **caractérisé en ce qu'**au moins un évidement de fenêtre est réalisé dans l'élément de renforcement (13), en particulier dans une zone triangulaire centrale.

22. Elément de renforcement plan pour un châssis auxiliaire réalisé sous forme d'un faux-châssis pour véhicules automobiles selon l'une quelconque des revendications 1 à 21, **caractérisé en ce**
**que** l'élément de renforcement (13) plan est réalisé en forme de triangle de telle manière que l'élément de renforcement (13) soit relié à l'état monté sur le châssis auxiliaire (1) avec une première zone de pointe triangulaire (21) à la traverse de châssis auxiliaire (5), avec une deuxième zone de pointe triangulaire (28) au premier longeron de châssis auxiliaire (4) et avec une troisième zone de pointe triangulaire (29) au deuxième longeron de châssis auxiliaire (3).
